# EUROPEAN PATENT SPECIFICATION

(11) **EP 2 071 055 B1**
(45) Date of publication and mention of the grant of the patent: **27.02.2019**
(21) Application number: 07806939.0
(22) Date of filing: 07.09.2007
(51) Int. Cl.: C23C 28/00, B32B 15/08, C25D 9/08, C25D 11/36, C25D 5/48, C25D 5/12

(54) **STEEL PLATE FOR CONTAINER, AND METHOD FOR PRODUCTION THEREOF**
STAHLBLECH FÜR BEHÄLTER UND VERFAHREN ZUR HERSTELLUNG DAFÜR
TÔLE D'ACIER POUR RÉCIPIENT ET SON PROCÉDÉ DE FABRICATION

(30) Priority: 08.09.2006 JP 2006244560; 16.03.2007 JP 2007069271
(43) Date of publication of application: 17.06.2009
(73) Proprietor: Nippon Steel & Sumitomo Metal Corporation, Tokyo 100-8071 (JP)
(72) Inventor: TACHIKI, Akira, Tokyo 100-8071 (JP); HIRANO, Shigeru, Tokyo 100-8071 (JP); NISHIDA, Hiroshi, Tokyo 100-8071 (JP); YOKOYA, Hirokazu, Tokyo 100-8071 (JP); HAMAGUCHI, Shinsuke, Tokyo 100-8071 (JP); TAKAMIYA, Toshiaki, Tokyo 100-8071 (JP)
(74) Representative: Vossius & Partner Patentanwälte Rechtsanwälte mbB
(86) International application number: PCT/JP2007/067507
(87) International publication number: WO 2008/029916

(56) References cited:
- EP-A1- 1 134 305
- WO-A1-00/61835
- WO-A1-00/61835
- JP-A- 11 229 156
- JP-A- 56 116 885
- JP-A- 56 116 885
- JP-A- 62 050 496
- JP-A- 62 050 496
- JP-A- 2000 234 181
- JP-A- 2002 355 921
- JP-A- 2003 063 518
- JP-A- 2005 290 531
- JP-A- 2007 284 789

## Description

### [Technical Field]

The present invention relates to a steel sheet for a container, which is used as a material for canning process and can be processed into various metal containers for beverages, foods, and the like, and a method of producing the same.

### [Background Art]

Metal containers used for beverages and foods are roughly classified into two-piece cans and three-piece cans. For example, in case of producing a two-piece can such as a DI (Drawing-Ironing) can, after the completion of Drawing-Ironing process, the inside of the can is coated, the outside of the can is then further coated and printed. On the other hand, in the case of producing a three-piece can, the surface corresponding to the inside of a can is coated and the surface corresponding to the outside of the can is printed, and then the can body portion is welded.

As such, in all cans, the coating process is an essential process after or before canning. In the coating process, a solvent-based or water-based coating composition is generally used and baking is performed after these coating compositions are applied. In this coating process, wastes derived from coating compositions are discharged as industrial wastes and exhaust gases (predominantly carbon dioxide gas) are released into air. On the other hand, for the purpose of global environmental conservation, reducing these industrial wastes and exhaust gases has recently been contemplated. In these circumstances, a technique of laminating films has attracted special attention in place of coating, and has rapidly propagated.

In the past, with regard to the two-piece can, there proposed many methods of producing a can including the steps of laminating a film on the surface of a metal plate and then subjecting to canning, and inventions related thereto. For example, Patent Document 1 listed below discloses a method of producing a DI can in which the improvement of coating adhesion property and corrosion resistance had been promoted by subjecting a material, to which a polyethylene terephthalate (PET) film is at least adhered on the surface of the metal material which being the inner side of the container, to the Drawing-Ironing process at the temperature lower than the crystallization temperature of the PET film and within the temperature ± 30°C of glass transition temperature (Tg) of the PET film so as to provide a molecular orientation to the PET film. In addition, in the method of manufacturing thin-walled and deep-drain can according to Patent Document 3 below, a metal plate coated with thermoplastic resin is heated and drawn at a temperature higher than the glass transition temperature (Tg) of the thermoplastic resin, and redrawn at a bending and pulling speed larger than 1 m/min by being heated to a temperature higher than the glass transition temperature (Tg) of the thermoplastic resin, thereby promoting the improvement of adhesion property, corrosion resistance and heat resistance of the resin coating.

In addition, Patent Document 2 listed below proposes a DI can obtained by forming an inorganic oxide layer which becomes an adhesion substrate by chromic acid treatment, phosphoric acid treatment, chromic acid/phosphoric acid treatment, or electrolytic chromic acid treatment, under a coating layer formed from a thermoplastic polyester resin provided to an inner surface of a can, forming a plating layer consisting of tin, nickel and/or aluminum to an outer surface of a can, and optimizing the amount of the component contained in the plating layer and the squeezing ratio, for the purpose of obtaining a DI can excellent in adhesiveness of a resin film, corrosion resistance, and appearance characteristic. In addition, Patent Document 4 listed below proposes a coated steel sheet for DI can obtained by forming an inorganic oxide layer which becomes an adhesion substrate by chrome hydrate, and optimizing the Cr amount in the inorganic oxide layer and the amount of the component contained in the plating layer, thereby promoting the improvement of processability.

Similarly, with regard to the three-piece can, there have been made various proposals on steel sheets for container obtained by laminating a film, methods of producing the same, and the like. For example, Patent Document 5 listed below discloses a film laminating steel belt for three-piece can in which at least one kind of Sn, Ni, and Cr is plated on a steel belt, thereafter a non- laminated section of 2 mm to 5 mm width extending in the longitudinal direction of the steel belt is provided on a surface of the steel belt which being the inner side of a can, and a thermoplastic film having a width corresponding to the height of the can is adhered by heating so as to be extended in a longitudinal direction of the steel belt. Further, Patent Document 6 listed below proposes a three-piece can having a multilayered organic film in which the inside of the can is made either by providing an adhesive layer/a thermoplastic resin film layer in the order or by providing only a thermoplastic resin film layer, to a steel sheet, and the exterior of the can is made either by providing an adhesive agent layer/a printing ink layer/a film layer/a lubricant film layer in this order or by providing the adhesive agent layer/the film layer/the printing ink layer/the lubricant film layer in this order, to the steel sheet. Furthermore, Patent Document 7 listed below discloses a steel sheet for a three-piece can having the multilayered organic film, and Patent Document 8 listed below proposes a manufacturing method of the stripelaminate steel sheet for a three-piece can.
[Patent Document 1] Japanese Examined Patent Application, Second Publication No. H01-055055 (Japanese Patent Publication No. 1571783)
[Patent Document 2] Japanese Examined Patent Application, Second Publication No. H03-033506 (Japanese Patent Publication No. 1670957)
[Patent Document 3] Japanese Unexamined Patent Application, First Publication No. H02-263523
[Patent Document 4] Japanese Examined Patent Application, Second Publication No. H02-025784 (Japanese Patent Publication No. 1601937)
[Patent Document 5] Japanese Unexamined Patent Application, First Publication No. H 03-236954
[Patent Document 6] Japanese Unexamined Patent Application, First Publication No. H05-112361
[Patent Document 7] Japanese Unexamined Patent Application, First Publication No. H05-111979
[Patent Document 8] Japanese Unexamined Patent Application, First Publication No. H05-147181

### [Disclosure of the Invention]

### [Problems to be Solved by the Invention]

However, techniques described in Patent Documents 1 to 6 have problems as follows. In recent years, the market of beverage containers is in a state of fierce cost and quality competition with the PET bottles, the containers formed with materials such as bottle and paper, and the metal containers. Consequently, also for the above laminated steel sheets for metal containers, those capable of maintaining excellent adhesion property and corrosion resistance, and providing more excellent canning processability, particularly film adhesion property, processed film adhesion property, and corrosion resistance, even if the coating treatment is performed in a conventional manner, are required. However, according to the present application of the techniques described in Patent Documents 1 to 6, although the effects on remarkably improving the global environmental conservation are obtained, a steel sheet for container which has excellent appearance and is excellent in all of Drawing-Ironing processability, weldability, corrosion resistance, coating composition adhesion property, and film adhesion property upon canning process cannot be obtained by these techniques in the related art.

The present invention is made in the light of these considerations, and the object thereof is to provide a steel sheet for container which is excellent in all of Drawing-Ironing processability, weldability, corrosion resistance, coating composition adhesion property, film adhesion property, and appearance; and a method of producing the same.

### [Means for Solving the Problems]

The present invention employed the followings in order to achieve the above-mentioned object.

That is, a steel sheet for container of the present invention includes a steel substrate, a Ni plating layer which contains 150 mg/m² to 1,000 mg/m² of Ni and is formed on at least one surface of the steel substrate, and either a coating provided by combining a phosphoric acid coating and a Zr coating, said combined coating being formed on the Ni plating layer by performing a cathode electrolytic treatment using an acidic solution prepared by dissolving Zr ions and phosphate ions; wherein said combined coating contains 0.1 mg/m² to 100 mg/m² in terms of P content and 0.1 mg/m² to 500 mg/m² in terms of Zr content,
or a coating provided by combining a phosphoric acid coating, a Zr coating and a phenol resin coating, said combined coating being formed on the Ni plating layer by performing a cathode electrolytic treatment using an acidic solution prepared by dissolving Zr ions, phosphate ions and a phenol resin; wherein said combined coating contains 0.1 mg/m² to 100 mg/m² in terms of P content, 0.1 mg/m² to 500 mg/m² in terms of Zr content and 0.1 mg/m² to 100 mg/m² in terms of C content;
wherein the phosphoric acid coating contains a Zr phosphate and the Zr coating contains an oxidized Zr.

In the steel sheet for container, it may be arranged such that: the applied amount of the Zr coating is in the range of 0.1 mg/m² to 15 mg/m² in terms of Zr content; the applied amount of the phosphoric acid coating is in the range of 0.1 mg/m² to 15 mg/m² in terms of P content; and the applied amount of the phenol resin coating is in the range of 0.1 mg/m² to 15 mg/m² in terms of C content.

In the steel sheet for container, it may be arranged such that: the applied amount of the Zr coating is in the range of 0.1 mg/m² to 9 mg/m² in terms of Zr content; the applied amount of the phosphoric acid coating is in the range of 0.1 mg/m² to 8 mg/m² in terms of P content; and the applied amount of the phenol resin coating is in the range of 0.1 mg/m² to 8 mg/m² in terms of C content.

In the steel sheet for container, either two kinds of the Zr coating and the phosphoric acid coating are formed on the Ni plating layer by a cathode electrolytic treatment, or
three kinds of the Zr coating, the phosphoric acid coating, and the phenol resin are formed on the Ni plating layer by a cathode electrolytic treatment.

In the steel sheet for container, the cathode electrolytic treatment is carried out in an acidic solution or an acidic solution containing tannic acid.

A method of producing a steel sheet for container of the present invention includes the steps of: forming a Ni plating layer containing 150 mg/m² to 1,000 mg/m² of Ni on at least one surface of the steel substrate; and either forming a coating provided by combining a phosphoric acid coating and a Zr coating on the Ni plating layer by performing a cathode electrolytic treatment using an acidic solution prepared by dissolving Zr ions and phosphate ions,
or forming a coating provided by combining a phophoric acid coating, a Zr coating and a phenol resin coating on the Ni plating layer by performing a cathode electrolytic treatment using an acidic solution prepared by dissolving Zr ions, phosphate ions and a phenol resin,
wherein the coating provided by combining the phosphoric acid coating and the Zr coating contains 0.1 mg/m² to 100 mg/m² in terms of P content and 0.1 mg/m² to 500 mg/m² in terms of Zr content, and
the coating provided by combining the phosphoric acid coating, the Zr coating and the phenol resin coating contains 0.1 mg/m² to 100 mg/m² in terms of P content, 0.1 mg/m² to 500 mg/m² in terms of Zr content and 0.1 mg/m² to 100 mg/m² in terms of C content; and wherein the phosphoric acid coating contains a Zr phosphate and the Zr coating contains an oxidized Zr.

In the method of producing a steel sheet for container, it may be arranged such that: the applied amount of the Zr coating is in the range of 0.1 mg/m² to 15 mg/m² in terms of Zr content; the applied amount of the phosphoric acid coating is in the range of 0.1 mg/m² to 15 mg/m² in terms of P content; and the applied amount of the phenol resin coating is in the range of 0.1 mg/m² to 15 mg/m² in terms of C content.

In the method of producing a steel sheet for container, it may be arranged such that: the applied amount of the Zr coating is in the range of 0.1 mg/m² to 9 mg/m² in terms of Zr content; the applied amount of the phosphoric acid coating is in the range of 0.1 mg/m² to 8 mg/m² in terms of P content; and the applied amount of the phenol resin coating is in the range of 0.1 mg/m² to 8 mg/m² in terms of C content.

In the method of producing a steel sheet for container, either
two kinds of the Zr coating and the phosphoric acid coating are formed on the Ni plating layer by a cathode electrolytic treatment, or
three kinds of the Zr coating, the phosphoric acid coating, and the phenol resin coating are formed on the Ni plating layer by a cathode electrolytic treatment.

In the method of producing a steel sheet for container, the cathode
electrolytic treatment is carried out in an acidic solution or an acidic solution containing tannic acid.

### [Effects of the Invention]

According to the present invention, a Ni plating layer is formed on at least one surface of the steel substrate; the Zr coating, the phosphoric acid coating, and optionally the phenol resin are further formed on the Ni plating layer by a cathode electrolytic treatment; and Ni amount in the Ni plating layer and applied amount of each coating are optimized. Accordingly, a steel sheet for container which is excellent in all of Drawing-Ironing processability, weldability, corrosion resistance, coating composition adhesion property, coating adhesion property, film adhesion property, and appearance can be obtained.

### [Best Mode for Carrying Out the Invention]

Hereinbelow, the best mode for carrying out the present invention will be explained in detail.

In the conventional laminated steel sheet, in many cases, on the surface of the steel substrate (steel sheet), a chromate coating to which an electrolytic chromate treatment is subjected, is formed. The chromate coating has a two-layer structure including a metal Cr layer and a hydrated Cr oxide layer formed thereon. Accordingly, a laminating film (an adhesive layer in case of a film with an adhesive) secures the adhesion with a steel substrate (steel sheet) via the hydrated chrome oxide layer of the chromate coating. Although details of the mechanism of adhesion have not been made clear, it is considered that the mechanism is based on a hydrogen bond between the hydroxyl group of hydrated chrome oxide and a functional group such as a carbonyl group or an ester group of the laminating film.

The present inventors have intensively studied on a new coating in place of the chromate coat. As a result, the inventors have found that
a coating provided in combination of the Zr coating and the phosphoric acid coating, on the surface of the Ni plating layer by a cathode electrolytic treatment, allows forming a very strong coherent bond with a laminating film to be applied on the coating, thereby giving excellent canning processability as compared with a conventional chromate coating. Thus, the present invention has been completed.

Firstly, the constitution of the steel sheet for container related to the present invention and reason for limiting the numerical value will be explained in detail. In the steel sheet for container, a Ni plating layer is formed on at least one surface of the steel substrate. The material and kind of the steel substrate in the steel sheet for container of the present invention is not specially limited, and a steel sheet usually used as a material for the container material may be used.

On the other hand, the Ni plating layer is provided to secure corrosion resistance. Since Ni is a metal having high corrosion resistance, the corrosion resistance can be improved by plating Ni on the surface of the steel substrate, as the steel for container of the present invention. The effect on improving corrosion resistance of the alloy layer due to Ni can be exhibited when the amount of Ni, that is, Ni amount on the Ni plating layer is not less than 10 mg/m². However, if the Ni amount on the plating is less than 150 mg/m², sufficient corrosion resistance cannot be secured. On the other hand, when Ni amount on the plating layer is increased, the effect for improving the corrosion resistance of the alloy layer is enhanced. However, if the Ni amount on the plating layer exceeds 1,000 mg/m², the improving effect is saturated and it is economically disadvantageous to plate Ni in amount exceeding 1,000 mg/m², as Ni is an expensive metal. Accordingly, the amount of Ni on the Ni plating layer is in the range of 150 mg/m² to 1,000 mg/m².

The Ni plating layer is preferably formed on both surfaces of the steel substrate. However, from the viewpoints of reducing a cost for production and the like, if one surface of the steel substrate is subjected to a surface treatment and the like which improves the corrosion resistance, Ni plating layer has only to be formed on the other surface only. In case of subjecting the steel sheet in which the Ni plating layer is formed on one surface only of the steel substrate, it is preferable that for example, the process is carried out so that the surface in which the Ni plating layer is formed become internal surface of the container.

In addition, the Ni plating layer in the present invention is not limited to those formed with only pure Ni, and may be formed with a Ni alloy, as long as the Ni amount is within the range of 150 mg/m² to 1,000 mg/m². For the purpose of improving the mechanical property, the steel substrate may be subjected to nitriding treatment. In the case, the effect due to the nitriding treatment such as hardly crushing and deforming is not decreased, even if the thickness of the substrate decreases.

Furthermore, in the steel sheet for container, a coating provided by combining a Zr coating, a phosphoric acid coating, and optionally a phenol resin is further formed on said Ni plating layer by a cathode electrolytic treatment, and this is most important characteristic point of the present invention. In the steel sheet for container of the present invention, the applied amount of the Zr coating is in the range of 0.1 mg/m² to 500 mg/m² in terms of Zr content; the applied amount of the phosphoric acid coating is in the range of 0.1 mg/m² to 100 mg/m² in terms of P content; and the applied amount of the phenol resin coating is in the range of 0.1 mg/m² to 100 mg/m² in terms of C content.

Even if the Zr coating, the phosphoric acid coating, and the phenol resin coating is each formed alone, a certain level of the effect can be seen, but sufficient practical performance cannot be obtained. Accordingly, in the steel sheet for container of the present invention, the coating provided by combining a Zr coating, a phosphoric acid coating, and optionally a phenol resin coating is formed, thereby obtaining excellent practical performance as shown below. In particular, more excellent practical performance is exhibited by forming the Zr coating, and the phosphoric acid coating and optionally the phenol resin coating.

Further, since each in the range where the coating amount is low, each property supplements each other, the coating provided by combining two kinds of the Zr coating and the phosphoric acid coating, exhibits more stable performances particularly in corrosion resistance and rust resistance.

Furthermore, since each in the range where the coating amount is low, each property supplements each other, a coating in which three kinds of the Zr coating, the phosphoric acid coating, and the phenol resin coating are formed, exhibits more stable performances particularly in film adhesion property, coating composition adhesion property, and corrosion property.

Among these coatings, a Zr coating is effective for securing corrosion resistance and adhesion property. The Zr coating in the present invention is formed from the coating including oxidized Zr.

Since the Zr compound has excellent corrosion resistance and adhesion property, when the amount of the Zr coating formed on the Ni plating layer is increased, corrosion resistance and adhesion property of the steel sheet for container is enhanced. However, if the applied amount of the Zr coating is less than 0.1 mg/m² in terms of Zr content in the coating, corrosion resistance and adhesion property in the level where there is no practical problem cannot be secured. On the other hand, if the applied amount of the Zr coating exceeds 500 mg/m² in terms of Zr content in the coating, the thickness of the Zr coating becomes too thick, resulting in deteriorating adhesion property of the Zr coating itself, and deteriorating weldability due to increase of electric resistance. Accordingly, in the case of forming the Zr coating on the Ni plating layer, the applied amount of Zr coating is in the range of 0.1 mg/m² to 500 mg/m² in terms of Zr content in the coating. In addition, if the applied amount of Zr coating exceeds 15 mg/m² in terms of Zr content in the coating, adhesion unevenness in coating may be expressed as appearance unevenness. Accordingly, the applied amount of Zr coating layer is preferably in the range of 0.1 mg/m² to 15 mg/m² in the terms of Zr content in the coating.

Furthermore, in order to preferably regulate the fine apparent unevenness, the applied amount of the Zr coating is preferably in the range of 0.1 mg/m² to 9 mg/m² in the terms of metal Zr content.

A phosphoric acid coating is effective for securing corrosion resistance and adhesion property. The phosphoric acid coating in the present invention consists of the coating including Zr phosphate.

Since the phosphoric acid has excellent corrosion resistance and adhesion property, when the amount of the phosphoric acid coating formed on the Ni plating layer is increased, corrosion resistance and adhesion property of the steel sheet for container is enhanced. However, if the applied amount of phosphoric acid coating is less than 0.1 mg/m² in terms of P content in the coating, corrosion resistance and adhesion property in the level where there is practically no problem cannot be secured. On the other hand, if the applied amount of phosphoric acid coating exceeds 100 mg/m² in terms of P content in the coating, the thickness of the phosphoric acid coating becomes too thick, resulting in deteriorating adhesion property of the phosphoric acid coating itself, and deteriorating weldability due to increase of electric resistance. Accordingly, in the case of forming the phosphoric acid coating on the Ni plating layer, the applied amount of phosphoric acid coating is in the range of 0.1 mg/m² to 100 mg/m² in terms of P content in the coating. In addition, if the applied amount of phosphoric acid coating exceeds 15 mg/m² in terms of P content in the coating, adhesion unevenness in coating may be expressed as appearance unevenness. Accordingly, the applied amount of phosphoric acid coating layer is preferably in the range of 0.1 mg/m² to 15 mg/m² in the terms of P content in the coating.

Furthermore, in order to preferably regulate the fine apparent unevenness, the applied amount of the phosphoric acid coating is preferably in the range of 0.1 mg/m² to 8 mg/m² in the terms of P content.

In addition, a phenol resin coating is effective for securing corrosion resistance. Since the phenol resin coating itself is an organic compound, adhesion property between coating composition and laminated film is excellent. Accordingly, when the amount of the phenol resin coating formed on the Ni plating layer is increased, corrosion resistance of the steel sheet for container is enhanced. However, if the applied amount of phenol resin coating is less than 0.1 mg/m² in terms of C content in the coating, corrosion resistance in the level where there is practically no problem cannot be secured. On the other hand, if the applied amount of phenol resin coating exceeds 100 mg/m² in terms of C content in the coating, electric resistance is increased, and weldability is deteriorated. Accordingly, in the case of forming the phenol resin coating on the Ni plating layer, the applied amount of phenol resin coating is preferably in the range of 0.1 mg/m² to 100 mg/m² in terms of C content in the coating. In addition, if the applied amount of phenol resin coating exceeds 15 mg/m² in terms of C content in the coating, adhesion unevenness in coating may be expressed as appearance unevenness. Accordingly, the applied amount of phenol resin coating layer is preferably in the range of 0.1 mg/m² to 15 mg/m² in the terms of C content in the coating.

Furthermore, in order to preferably regulate the fine apparent unevenness, the amount of the phenol resin coating is preferably 0.1 mg/m² to 8 mg/m² in the terms of C amount.

The Ni amount in the Ni plating layer, the Zr amount in the Zr coating, and the P amount in the phosphoric acid coating can be measured by for example, quantitative analysis with X-ray fluorescence. The C amount in the phenol coating can be determined by for example, subtracting C amount contained in the steel as a background from a value measured by method for measuring total carbon amount with gas chromatography.

Next, the method for producing the steel sheet for container of the present invention consisted as described above, will be explained. In the case of producing the steel sheet for container of the present invention, for example, the Ni plating layer is formed on at least one surface of the steel substrate produced through the processes including hot rolling, acid wash, cold rolling, annealing, and temper rolling, from the usual process of producing a slab. The method for forming the Ni plating layer is not particularly limited, and there may be employed publically known techniques such as dry plating e.g., vapor deposition, sputtering, and the like, and wet plating process e.g., electroplating, electroless plating, and the like.

Further, there may be also performed a heating treatment to form a diffusion layer, after plating Ni on the surface of the steel substrate. Furthermore, in the case of forming the Ni plating layer with diffusion plating process, a diffusion treatment for forming a diffusion layer is performed in an annealing furnace, after plating Ni on the surface of the steel substrate, but a nitriding treatment may be performed before and after the diffusion treatment or at the same time of the diffusion treatment.

Next, a coating is formed on the Ni plating layer by combining a Zr coating, a phosphoric acid coating, and optionally the phenol resin. A coating can be formed by for example, a process for dipping the steel substrate in an acidic solution in which a Zr ion, a phosphoric acid ion, and optionally a phenol resin having low molecular weight are dissolved, or a process for subjecting the steel substrate to a cathode electrolytic treatment using the acidic solution. However, in the dipping process, the Ni plating layer which being a substrate is etched upon forming each coating, resulting in causing uneven adhesion of coating, and making the treatment time longer, thereby being disadvantageous in industrial production. On the other hand, in the cathode electrolytic treatment, effects including a forced charge transfer and a surface cleaning due to hydrogen generation on the surface of the steel substrate, and further an effect accelerating an adhesion due to pH increase, makes it possible to form even coating for short time that is approximately a few seconds to several tens of seconds, thereby being industrially advantageous. Accordingly, in the method of producing the steel sheet for container according to the present invention, the Zr coating, the phosphoric acid coating, and optionally the phenol resin coating are formed with the cathode electrolytic treatment.

A coating provided by combining a Zr coating and a phosphoric acid coating may be formed on the Ni plating layer by for example, a process for dipping the steel substrate in an acidic solution in which a Zr ion and a phosphoric acid ion are dissolved, or a process for subjecting the steel substrate to a cathode electrolytic treatment using the acidic solution. However, from the same reason described above, the dipping process is industrially disadvantageous, while the cathode electrolytic treatment is industrially advantageous. Accordingly, in the method of producing the steel sheet for container according to the present invention, the Zr coating and the phosphoric acid coating are formed with the cathode electrolytic treatment.

A coating provided by combining a Zr coating, a phosphoric acid coating, and a phenol resin coating may be formed on the Ni plating layer
by for example, a process for dipping the steel substrate in an acidic solution in which a Zr ion, a phosphoric acid ion and a phenol resin having low molecular weight are dissolved, or a process for subjecting the steel substrate to a cathode electrolytic treatment using the acidic solution. From the same reason described above, the dipping process is industrially disadvantageous, while the cathode electrolytic treatment is industrially advantageous. Accordingly, in the method of producing the steel sheet for container according to the present invention, the Zr coating, the phosphoric acid coating, and the phenol resin coating are formed with the cathode electrolytic treatment.

If tannic acid is added to the acidic solution used upon the cathode electrolytic treatment, tannic acid is bonded to Fe, to form Fe tannate coating in the region where the Ni plating layer is not formed on the surface of the steel substrate, thereby obtaining the effect capable of improving rust resistance or adhesion property. Accordingly, upon the cathode electrolytic treatment, tannic acid may be added to the acidic solution in which a Zr ion, a phosphoric acid ion, and optionally a phenol resin having low molecular weight are dissolved, if necessary.

As the solvent of the acidic solution used upon forming the Zr coating, the phosphoric acid coating, and optionally the phenol resin, for example, water, and the like may be employed, but the present invention is not limited to this, and may be arbitrarily selected depending on materials to be dissolved, forming methods, conditions, and the like.

In the steel sheet for container of the present invention, the Ni plating layer is formed on at least one surface or the steel substrate, and a coating provided by combining a Zr coating, a phosphoric acid coating, and optionally a phenol resin coating are formed thereon, thereby obtaining excellent corrosion resistance, strongly maintaining coating composition adhesion property and film adhesion property, and obtaining excellent Drawing-Ironing processability. In addition, the applied amount of the coating is set in the range where electrical resistance upon welding is not increased to the level to be problem., thereby obtaining excellent weldability. Furthermore, the coating which is fine coating and even is formed with the cathode electrolytic treatment, thereby obtaining excellent appearance.

### [Examples]

Hereinbelow, effects of the present invention will be explained in detail with the reference to Examples and Comparative Examples of the present invention. In the present Example, firstly, the Ni plating steel sheet was produce by (A1) the process including subjecting a steel substrate (steel sheet) having a thickness of 0.17 mm to 0.23 mm which has been subjected to annealing and temper rolling after cold rolling, to degreasing and acid wash, and then plating with Ni to both surface thereon, using a Watts bath, or (A2) the process including plating with Ni on both surface of a steel substrate (steel sheet) having a thickness of 0.17 mm to 0.23 mm which has been subjected to cold rolling, using a Watts bath, annealing to form a Ni diffusion layer, and then subjecting to degreasing and acid wash.

Next, on the surface (both surface) of the above Ni plating steel sheet produced according to the process of (A1) or (A2), the Zr coating, the phosphoric acid coating, and/or the phenol resin, were formed by the following processes.
(B1) The above Ni plating steel sheet produced according to the process of (A1) or (A2) was dipped in a treatment solution prepared by dissolving Zr fluoride, phosphoric acid, and phenol resin in distilled water, subjected to a cathode electrolytic treatment, and then washed with water and dried.
(B2) The above Ni plating steel sheet produced according to the process of (A1) or (A2) was dipped in a treatment solution prepared by dissolving phosphoric acid and phenol resin in distilled water, subjected to a cathode electrolytic treatment, and then washed with water and dried. This process is not within the claims.
(B3) The above Ni plating steel sheet produced according to the process of (A1) or (A2) was dipped in a treatment solution prepared by dissolving Zr fluoride and phosphoric acid in distilled water, subjected to a cathode electrolytic treatment, and then washed with water and dried.
(B4) The above Ni plating steel sheet produced according to the process of (A1) or (A2) was dipped in a treatment solution prepared by dissolving Zr fluoride and phenol resin in distilled water, subjected to a cathode electrolytic treatment, and then washed with water and dried. This process is not within the claims.
(B5) The above Ni plating steel sheet produced according to the process of (A1) or (A2) was dipped in a treatment solution prepared by dissolving Zr fluoride, phosphoric acid, and tannic acid in distilled water, subjected to a cathode electrolytic treatment, and then washed with water and dried.

Next, each of steel sheets for container produced according to the above processes was used as the test material, and the test materials of these Examples and Comparative Examples were subjected to evaluations on each property of processability, weldability, film adhesion property, coating composition adhesion property, corrosion resistance, rust resistance, and appearance. Specific evaluation methods and evaluation criteria will be explained below.

### (1) Processability

On both surfaces of each test material in Examples and Comparative Examples, PET film having a thickness of 20µm was laminated at 200°C, a canning process including a drawing process and an ironing process was performed in steps, and the moldability was evaluated. Consequently, those having remarkably excellent moldability were evaluated as VG, those having excellent moldability were evaluated as G, those having scratch were evaluated as B, and those which could not be subjected to processing due to a fracture generation during the processing were evaluated as VB.

### (2) Weldability

Using a wire seam welding machine, welding was performed with changing the current under the conditions of a welding wire speed of 80 m/min, and the weldability was generally judged by the extent of a proper current range from the minimum current for a sufficient welding strength to the maximum current at which welding defects such as dusts, welding sputtering and the like occur frequently. Consequently, those having remarkably excellent weldability were evaluated as VG, those having excellent weldability were evaluated as G, those having inferior weldability were evaluated as B, and those which could not be subjected to welding were evaluated as VB.

### (3) Film adhesion property

On both surface of each test material in Examples and Comparative Examples, PET film having a thickness of 20µm was laminated at 200°C, a Drawing-Ironing process was performed to produce a can body, and the obtained can body was subjected to a retort treatment at 125°C for 30 minutes and the state of peeling of the film was evaluated. Consequently, those with no peeling at all were evaluated as VG, those with extremely slight peeling only by a degree of causing no practical problem were evaluated as G, those with slight peeling were evaluated as B, and those with peeling in a large portion were evaluated as VB.

### (4) Coating composition adhesion property

On one surface of each test material in Examples and Comparative Examples, epoxy-phenol resin was coated, and maintained under condition of the temperature at 200°C for 30 minutes, to perform annealing. To the part coated with the resin, such depth cut that reach the steel substrate at 1 mm intervals on a grid was made, an adhesive tape was adhered to the cut part, and then peeled, to perform a grid peeling test. Consequently, those with no peeling at all were evaluated as VG, those with extremely slight peeling only by a degree of causing no practical problem were evaluated as G, those with slight peeling were evaluated as B, and those with peeling in a large portion were evaluated as VB.

### (5) Corrosion resistance

On one surface of each test material in Examples and Comparative Examples, epoxy-phenol resin was coated, and maintained under condition of the temperature at 200°C for 30 minutes, to perform annealing. To the part coated with the resin, such depth cross cut that reach the steel substrate was made, and thus obtained test material was dipped into a test solution containing the mixture solution of citric acid (1.5 % by mass) - salt (1.5 % by mass), under the condition of the temperature at 45°C for 72 hours, washed and dried. Thereafter, the tape peeling test was performed to evaluate corrosion resistance by corrosion condition under the coating (epoxy-phenol resin coating) in the cross cut part and condition in plate part. Consequently, those confirmed to give no corrosion under the coating were evaluated as VG, those confirmed to give slight corrosion under the coating only by a degree of causing no practical problem were evaluated as G, those confirmed to give a slight corrosion under the coating or confirmed to give a slight corrosion in the plate part were evaluated as B, and those confirmed to give significant corrosion under the coating or confirmed to give a significant corrosion in the plate part were evaluated as VB.

### (6) Rust resistance

For each test material in Examples and Comparative Examples, cycle test repeating the processes including maintaining the test material under circumstance of a humidity of 90% for 2 hours, and maintaining the test material under circumstance of a humidity of 40% for 2 hours was performed for two months, to evaluate the condition of generating rust. Consequently, those showing no rusting at all were evaluated as VG, those showing extremely slight rusting only by a degree of causing no practical problem were evaluated as G, those showing slight rusting were evaluated as B, and those showing rusting in a large portion were evaluated as VB.

### (7) Appearance

Each test material in Examples and Comparative Examples was observed with eye, to evaluate condition of unevenness occurred in the Zr coating, the phosphoric acid coating, and the phenol resin coating. Consequently, those showing no unevenness were evaluated as VG, those showing extremely slight unevenness only by a degree of causing no practical problem were evaluated as G, those showing unevenness only by a degree of causing no practical problem were evaluated as A, those showing unevenness were evaluated as B, and those showing significant unevenness were evaluated as VB.

The above results are shown in following Tables 1 and 2. In following Tables 1 and 2, the Ni plating layer amount and the applied amount of each coating in each test material in Examples and Comparative Examples are shown together. The Ni plating layer amounts shown in following Tables 1 and 2 are values determined by an X-ray fluorescence measurement technique. For the applied amounts of each coating, the Zr coating amount (Zr amount) and the phosphoric acid coating amount (P amount) are values determined by a quantitative analysis with X-ray fluorescence. The phenol resin coating amounts (C amount) are values determined by a method for measuring total carbon amount with gas chromatography (wherein the C amount contained in the steel was subtracted as a background) In addition, the under line in following Table 2 means a value outside the specified range of the present invention.

**[Table 1]**

| | No. | *1 | | Test material | | | | Evaluation result | | | | | | |
|---|---|---|---|---|---|---|---|---|---|---|---|---|---|---|
| | | *2 | *3 | *2 | *4 | *5 | *6 | *7 | *8 | *9 | *10 | *11 | *12 | *13 |
| Example | 1 | A1 | 500 | B1 | 0.4 | 0.3 | 0.8 | VG | VG | VG | VG | VG | VG | VG |
| Example | 2 | A1 | 500 | B1 | 5.2 | 3.8 | 1.8 | VG | VG | VG | VG | VG | VG | VG |
| Example | 3 | A1 | 500 | B1 | 14 | 8.6 | 3.5 | VG | VG | VG | VG | VG | VG | G to VG |
| Example | 4 | A1 | 550 | B1 | 200 | 61 | 31 | VG | G to VG | G | VG | VG | VG | Ato G |
| Example | 5 | A1 | 550 | B1 | 480 | 85 | 30 | VG | G | G | VG | VG | VG | A to G |
| Example | 6 | A1 | 160 | B1 | 14 | 7.1 | 10 | VG | VG | VG | VG | VG | VG | G |
| Example * | 7 | A1 | 450 | B2 | - | 10 | 4.6 | VG | VG | VG | VG | VG | VG | G |
| Example * | 8 | A1 | 890 | B2 | - | 95 | 24 | VG | VG | VG | VG | VG | VG | A to G |
| Example* | 9 | A1 | 500 | B2 | - | 15 | 88 | VG | G to VG | VG | VG | VG | VG | A to G |
| Example | 10 | A1 | 170 | B3 | 8.3 | 2.3 | - | VG | VG | G | VG | VG | VG | VG |
| Example | 11 | A1 | 550 | B3 | 380 | 87 | - | VG | G | G to VG | VG | VG | VG | A to G |
| Example | 12 | A1 | 350 | B3 | 13 | 8.3 | - | VG | VG | G | VG | VG | VG | A to G |
| Example | 13 | A1 | 180 | B5 | 11 | 1.5 | 0.5 | VG | VG | VG | VG | VG | VG | G |
| Example | 14 | A1 | 450 | B5 | 8 | 2 | 0.7 | VG | VG | VG | VG | VG | VG | VG |
| Example | 15 | A1 | 950 | B5 | 230 | 35 | 15 | VG | G to VG | VG | VG | VG | VG | A |
| Example | 16 | A2 | 400 | B1 | 2.8 | 1.2 | 0.7 | VG | VG | VG | VG | VG | VG | VG |
| Example | 17 | A2 | 650 | B1 | 220 | 36 | 21 | VG | G to VG | VG | VG | VG | VG | A |
| Example * | 18 | A2 | 500 | B2 | - | 15 | 7.5 | VG | VG | VG | VG | G to VG | VG | A to G |
| Example * | 19 | A2 | 500 | B2 | - | 8.3 | 1.2 | VG | VG | VG | VG | G to VG | VG | G to VG |
| Example * | 20 | A2 | 200 | B4 | 8.8 | 4.3 | - | VG | VG | G to VG | VG | VG | VG | VG |
| Example * | 21 | A2 | 350 | B4 | 18 | 5 | - | VG | VG | G to VG | VG | VG | VG | G |
| Example | 22 | A2 | 600 | B5 | 5.7 | 2.6 | 1.8 | VG | VG | VG | VG | VG | VG | VG |
| Example | 23 | A2 | 550 | B5 | 15 | 6.8 | 3.3 | VG | VG | VG | VG | VG | VG | G |

| | | | | | | | | | | | | | | |
|---|---|---|---|---|---|---|---|---|---|---|---|---|---|---|
| *1: Ni plating steel sheet *2: Treatment process *3: Ni plating layer amount (mg/m²) *4: Zr coating applied amount (mg/m²) *5: P coating applied amount (mg/m²) *6: C coating applied amount (mg/m²) *7: Processability *8: Weldability *9: Film adhesion property *10: Coating adhesion property *11: Corrosion resistance *12: Rust resistance * not within the claims *13: Appearance | | | | | | | | | | | | | | |

**[Table 2]**

| | No. | *1 | | Test material | | | | Evaluation result | | | | | | |
|---|---|---|---|---|---|---|---|---|---|---|---|---|---|---|
| | | *2 | *3 | *2 | *4 | *5 | *6 | *7 | *8 | *9 | *10 | *11 | *12 | *13 |
| Example | 24-1 | A1 | 160 | B1 | 8.7 | 6.4 | 7.7 | VG | VG | VG | VG | VG | VG | VG |
| Example | 24-2 | A1 | 180 | B1 | 1.3 | 0.2 | 0.2 | VG | VG | VG | VG | VG | VG | VG |
| Example | 25 | A1 | 550 | B1 | 1.5 | 0.4 | 0.2 | VG | VG | VG | VG | VG | VG | VG |
| Example | 26 | A1 | 540 | B1 | 3.2 | 1.1 | 0.5 | VG | VG | VG | VG | VG | VG | VG |
| Example | 27 | A1 | 550 | B1 | 5.6 | 3.1 | 1.8 | VG | VG | VG | VG | VG | VG | VG |
| Example | 28 | A1 | 980 | B1 | 0.3 | 0.2 | 0.1 | VG | VG | VG | VG | VG | VG | VG |
| Example * | 29 | A1 | 150 | B2 | - | 7.6 | 5.3 | VG | VG | VG | VG | G | G | VG |
| Example * | 30 | A1 | 500 | B2 | - | 0.5 | 0.3 | VG | VG | G to VG | VG | G | G | VG |
| Example * | 31 | A1 | 520 | B2 | - | 5.4 | 2.8 | VG | VG | VG | VG | VG | VG | VG |
| Example * | 32 | A1 | 990 | B2 | - | 0.3 | 0.1 | VG | VG | VG | VG | G | G | VG |
| Example * | 33 | A1 | 160 | B4 | 0.4 | 0.2 | - | VG | VG | VG | VG | G | G | VG |
| Example * | 34 | A1 | 490 | B4 | 3.8 | 1.9 | - | VG | VG | VG | VG | G | VG | VG |
| Example * | 35 | A1 | 520 | B4 | 6.6 | 3.4 | - | VG | VG | VG | VG | VG | VG | VG |
| Example * | 36 | A1 | 970 | B4 | 5.5 | 2.8 | - | VG | VG | VG | VG | VG | VG | VG |
| Example | 37 | A1 | 180 | B5 | 2.3 | 0.8 | 2.3 | VG | VG | VG | VG | VG | VG | VG |
| Example | 38 | A1 | 510 | B5 | 5.3 | 1.9 | 2.6 | VG | VG | VG | VG | VG | VG | VG |
| C.E. | 1 | A1 | 110 | B1 | 5.5 | 3.8 | 1.5 | VG | VG | VG | VG | B | B | VG |
| C.E. | 2 | A1 | 450 | - | 15 | - | - | VG | VG | VB | VB | VB | VB | G |
| C.E. | 3 | A1 | 450 | - | - | 2.9 | - | VG | VG | VB | VB | VB | VB | VG |
| C.E. | 4 | A1 | 550 | - | - | - | 2.8 | VG | B | G | VB | VB | VB | G |
| C.E. | 5 | A1 | 450 | B1 | 0.5 | 0.05 | 0.6 | VG | B | VG | VB | B | B | VG |
| C.E. | 6 | A1 | 450 | B1 | 0.01 | 0.4 | 0.8 | VG | B | VG | B | B | B | VG |
| C.E. | 7 | A1 | 450 | B1 | 40 | 115 | 120 | B | VB | VB | VB | VB | B | VB |
| C.E. | 8 | A1 | 450 | B2 | - | 5.7 | 0.05 | B | VB | B | B | B | VB | VG |
| C.E. | 9 | A1 | 450 | B3 | 550 | 120 | - | VB | VB | VB | B | B | B | VB |
| C.E. | 10 | A1 | 500 | B4 | 5.4 | - | 0.03 | B | VB | VB | VB | VB | B | B |
| C.E. | 11 | A1 | 450 | B5 | 120 | 110 | 17 | VB | VB | B | B | B | G | VB |

| | | | | | | | | | | | | | | |
|---|---|---|---|---|---|---|---|---|---|---|---|---|---|---|
| C.E.: Comparative Example *1: Ni plating steel sheet *2: Treatment process *3: Ni plating layer amount (mg/m²) *4: Zr coating applied amount (mg/m²) *5: P coating applied amount (mg/m²) *6: C coating applied amount (mg/m²) *7: Processability *8: Weldability *9: Film adhesion property *10: Coating adhesion property *11: Corrosion resistance *12: Rust resistance *13: Appearance | | | | | | | | | | | | | | |

As shown in the above Tables 1 and 2, the test material in Comparative Example No. 1 in which the Ni plating layer amount (Ni amount) is less than the specified range of the present invention was inferior in corrosion resistance and rust resistance. In addition, the test material in Comparative Example No. 2 in which the Zr coating only is formed on the Ni plating layer and the test material in Comparative Example No. 3 in which the phosphoric acid coating only is formed on the Ni plating layer were excellent in processability, weldability, and appearance, but were defective in film adhesion property, coating composition adhesion property, corrosion resistance, and rust resistance. Furthermore, the test material in Comparative Example No. 4 in which the phenol resin coating only is formed on the Ni plating layer was defective in coating composition adhesion property, corrosion resistance, and rust resistance, and inferior in weldability.

On the other hand, the test material in Comparative Example No. 5 in which all of the Zr coating, the phosphoric acid coating, and phenol resin coating are formed on the Ni plating layer, but the phosphoric acid coating amount (P amount) is less than the specified range of the present invention, and the test material in Comparative Example No. 6 in which the Zr coating (Zr amount) is less than the specified range of the present invention, were inferior in weldability, coating composition adhesion property, corrosion resistance, and rust resistance, in particular, the test material in Comparative Example No. 5 was defective in coating composition adhesion property. The test material in Comparative Example No. 7 in which the phosphoric acid coating amount (P amount) and the phenol resin coating (C amount) exceed the specified range of the present invention, was defective in weldability, film adhesion property, coating composition adhesion property, and corrosion resistance, and further inferior in processability and rust resistance. Furthermore, the test material in Comparative Example No. 11 in which the phosphoric acid coating amount (P amount) only exceeds the specified range of the present invention was defective in processability, weldability, and appearance, and inferior in film adhesion property, coating composition adhesion property, and corrosion resistance.

The test material in Comparative Example No. 8 in which the phosphoric acid coating and phenol resin coating are formed on the Ni plating layer but the phenol resin coating amount (C amount) is less than the specified range of the present invention, was excellent in appearance, but defective in weldability and rust resistance, and inferior in other characteristics. Further, the test material in Comparative Example No. 9 in which the Zr coating and the phosphoric acid coating are formed on the Ni plating layer but the applied amounts are outside the specified range of the present invention, was defective in processability, weldability, film adhesion property, and appearance, and inferior in other characteristics. Furthermore, the test material in Comparative Example No. 10 in which the Zr coating and the phenol resin coating are formed on the Ni plating layer, but the phenol resin coating amount (C amount) is less than the specified range of the present invention, was defective in weldability, film adhesion property, and coating composition adhesion property, and further inferior in processability, rust resistance, and appearance.

On the other hand, with the test materials in Example Nos. 1 to 47 produced within the specified range of the present invention, excellent properties were obtained in all evaluation items of processability, weldability, film adhesion property, coating composition adhesion property, corrosion resistance, rust resistance, and appearance. In particular, all of the test materials in Example Nos. 29 to 47 are provided with at least two kinds of the Zr coating in which the applied amount of the Zr coating is in the range of 0.1 mg/m² to 9 mg/m² in terms of Zr content; the phosphoric acid coating in which the applied amount of the phosphoric acid coating is in the range of 0.1 mg/m² to 8 mg/m² in terms of P content; and the phenol resin coating in which the applied amount of the phenol resin coating is in the range of 0.1 mg/m² to 8 mg/m² in terms of C content. Accordingly, the property particularly excellent in appearance can be obtained.

### [Industrial Applicability]

According to the present invention, a Ni plating layer is formed on at least one surface of a steels substrate, a coating provided by combining a Zr coating, a phosphoric acid coating, and optionally a phenol resin coating are formed on the Ni plating layer by a cathode electrolytic treatment, and the Ni content in the Ni plating layer and each application amount of coatings are optimized. As the result, a steel sheet for container which is excellent in all of Drawing-Ironing processability, weldability, corrosion resistance, coating composition adhesion property, film adhesion property, rust resistance, and appearance can be obtained.

## Claims

1. A steel sheet for container comprising:
a steel substrate;
a Ni plating layer which contains 150 mg/m² to 1,000 mg/m² of Ni and is formed on at least one surface of the steel substrate; and
either a coating provided by combining a phosphoric acid coating and a Zr coating, said combined coating being formed on the Ni plating layer by performing a cathode electrolytic treatment using an acidic solution prepared by dissolving Zr ions and phosphate ions; wherein said combined coating contains 0.1 mg/m² to 100 mg/m² in terms of P content and 0.1 mg/m² to 500 mg/m² in terms of Zr content,
or a coating provided by combining a phosphoric acid coating, a Zr coating and a phenol resin coating, said combined coating being formed on the Ni plating layer by performing a cathode electrolytic treatment using an acidic solution prepared by dissolving Zr ions, phosphate ions and a phenol resin; wherein said combined coating contains 0.1 mg/m² to 100 mg/m² in terms of P content, 0.1 mg/m² to 500 mg/m² in terms of Zr content and 0.1 mg/m² to 100 mg/m² in terms of C content;
wherein the phosphoric acid coating contains a Zr phosphate and the Zr coating contains an oxidized Zr.

2. The steel sheet for container according to claim 1, wherein
the coating provided by combining the phosphoric acid coating and the Zr coating contains 0.1 mg/m² to 15 mg/m² in terms of Zr content; and
0.1 mg/m² to 15 mg/m² in terms of P content, or
the coating provided by combining the phosphoric acid coating, the Zr coating and
the phenol resin coating contains 0.1 mg/m² to 15 mg/m² in terms of Zr content;
0.1 mg/m² to 15 mg/m² in terms of P content; and
0.1 mg/m² to 15 mg/m² in terms of C content.

3. The steel sheet for container according to claim 1, wherein
the coating provided by combining the phosphoric acid coating and the Zr coating contains 0.1 mg/m² to 9 mg/m² in terms of Zr content; and
0.1 mg/m² to 8 mg/m² in terms of P content, or
the coating provided by combining the phosphoric acid coating, the Zr coating and
the phenol resin coating contains 0.1 mg/m² to 9 mg/m² in terms of Zr content;
0.1 mg/m² to 8 mg/m² in terms of P content; and
0.1 mg/m² to 8 mg/m² in terms of C content.

4. The steel sheet for container according to claim 1, wherein
the cathode electrolytic treatment is carried out in an acidic solution containing tannic acid.

5. A method of producing a steel sheet for container as defined in any one of claims 1 to
4, comprising the steps of:
forming a Ni plating layer containing 150 mg/m² to 1,000 mg/m² of Ni on at least one surface of the steel substrate; and
either forming a coating provided by combining a phosphoric acid coating and a Zr coating on the Ni plating layer by performing a cathode electrolytic treatment using an acidic solution prepared by dissolving Zr ions and phosphate ions,
or forming a coating provided by combining a phophoric acid coating, a Zr coating and a phenol resin coating on the Ni plating layer by performing a cathode electrolytic treatment using an acidic solution prepared by dissolving Zr ions, phosphate ions and a phenol resin,
wherein the coating provided by combining the phosphoric acid coating and the Zr coating contains 0.1 mg/m² to 100 mg/m² in terms of P content and 0.1 mg/m² to 500 mg/m² in terms of Zr content, and
the coating provided by combining the phosphoric acid coating, the Zr coating and the phenol resin coating contains 0.1 mg/m² to 100 mg/m² in terms of P content, 0.1 mg/m² to 500 mg/m² in terms of Zr content and 0.1 mg/m² to 100 mg/m² in terms of C content; and wherein the phosphoric acid coating contains a Zr phosphate and the Zr coating contains an oxidized Zr.

6. The method of producing a steel sheet for container according to claim 5, wherein
the coating provided by combining the phosphoric acid coating and the Zr coating contains 0.1 mg/m² to 15 mg/m² in terms of Zr content; and
0.1 mg/m² to 15 mg/m² in terms of P content, or
the coating provided by combining the phosphoric acid coating, the Zr coating and the phenol resin coating contains 0.1 mg/m² to 15 mg/m² in terms of Zr content;
0.1 mg/m² to 15 mg/m² in terms of P content; and
0.1 mg/m² to 15 mg/m² in terms of C content.

7. The method of producing a steel sheet for container according to claim 5, wherein
the coating provided by combining the phosphoric acid coating and the Zr coating contains 0.1 mg/m² to 9 mg/m² in terms of Zr content; and
0.1 mg/m² to 8 mg/m² in terms of P content, or
the coating provided by combining the phosphoric acid coating, the Zr coating and the phenol resin coating contains 0.1 mg/m² to 9 mg/m² in terms of Zr content;
0.1 mg/m² to 8 mg/m² in terms of P content; and
0.1 mg/m² to 8 mg/m² in terms of C content.

8. The method of producing a steel sheet for container according to claim 5, wherein
the cathode electrolytic treatment is carried out in the acidic solution containing tannic acid.

## Patentansprüche

1. Ein Stahlblech für Behälter, umfassend:
ein Stahlsubstrat,
eine Ni-Plattierungsschicht, welche 150 mg/m² bis 1.000 mg/m² an Ni enthält und auf mindestens einer Oberfläche des Stahlsubstrats gebildet ist; und
entweder eine Beschichtung, welche durch Kombinieren einer Phosphorsäurebeschichtung und einer Zr-Beschichtung bereitgestellt wird, wobei die kombinierte Beschichtung auf der Ni-Plattierungsschicht gebildet wird, indem eine elektrolytische Kathodenbehandlung unter Verwendung einer sauren Lösung, hergestellt durch Lösen von Zr-Ionen und Phosphationen, durchgeführt wird; wobei die kombinierte Beschichtung 0,1 mg/m² bis 100 mg/m², ausgedrückt als P-Gehalt und 0,1 mg/m² bis 500 mg/m², ausgedrückt als Zr-Gehalt, enthält,
oder eine Beschichtung, welche durch Kombinieren einer Phosphorsäurebeschichtung, einer Zr-Beschichtung und einer Phenolharzbeschichtung bereitgestellt wird, wobei die kombinierte Beschichtung auf der Ni-Plattierungschicht gebildet wird, indem eine elektrolytische Kathodenbehandlung unter Verwendung einer sauren Lösung, hergestellt durch Lösen von Zr-Ionen, Phosphationen und eines Phenolharzes, durchgeführt wird, wobei die kombinierte Beschichtung 0,1 mg/m² bis 100 mg/m², ausgedrückt als P-Gehalt, 0,1 mg/m² bis 500 mg/m², ausgedrückt als Zr-Gehalt und 0,1 mg/m² bis 100 mg/m², ausgedrückt als C-Gehalt, enthält;
wobei die Phosphorsäurebeschichtung ein Zr-Phosphat enthält und die Zr-Beschichtung ein oxidiertes Zr enthält.

2. Das Stahlblech für Behälter nach Anspruch 1, wobei
die durch Kombinieren der Phosphorsäurebeschichtung und der Zr-Beschichtung bereitgestellte Beschichtung 0,1 mg/m² bis 15 mg/m², ausgedrückt als Zr-Gehalt; und
0,1 mg/m² bis 15 mg/m², ausgedrückt als P-Gehalt, enthält, oder
die durch Kombinieren der Phosphorsäurebeschichtung, der Zr-Beschichtung und der Phenolharzbeschichtung bereitgestellte Beschichtung 0,1 mg/m² bis 15 mg/m², ausgedrückt als Zr-Gehalt;
0,1 mg/m² bis 15 mg/m², ausgedrückt als P-Gehalt; und
0,1 mg/m² bis 15 mg/m², ausgedrückt als C-Gehalt, enthält.

3. Das Stahlblech für Behälter nach Anspruch 1, wobei
die durch Kombinieren der Phosphorsäurebeschichtung und der Zr-Beschichtung bereitgestellte Beschichtung 0,1 mg/m² bis 9 mg/m², ausgedrückt als Zr-Gehalt; und
0,1 mg/m² bis 8 mg/m², ausgedrückt als P-Gehalt, enthält, oder
die durch Kombinieren der Phosphorsäurebeschichtung, der Zr-Beschichtung und der Phenolharzbeschichtung bereitgestellte Beschichtung 0,1 mg/m² bis 9 mg/m², ausgedrückt als Zr-Gehalt;
0,1 mg/m² bis 8 mg/m², ausgedrückt als P-Gehalt; und
0,1 mg/m² bis 8 mg/m², ausgedrückt als C-Gehalt, enthält.

4. Das Stahlblech für Behälter nach Anspruch 1, wobei
die elektrolytische Kathodenbehandlung in einer Gerbsäure enthaltenden sauren Lösung durchgeführt wird.

5. Ein Verfahren zur Herstellung eines Stahlblechs für Behälter wie in einem der Ansprüche 1 bis 4 definiert, umfassend die Schritte:
Bilden einer Ni-Plattierungsschicht, die 150 mg/m² bis 1.000 mg/m² an Ni enthält, auf mindestens einer Oberfläche des Stahlsubstrats; und
entweder Bilden einer Beschichtung, die durch Kombinieren einer Phosphorsäurebeschichtung und einer Zr-Beschichtung auf der Ni-Plattierungschicht bereitgestellt wird, indem eine elektrolytische Kathodenbehandlung unter Verwendung einer sauren Lösung, hergestellt durch Lösen von Zr-Ionen und Phosphationen, durchgeführt wird,
oder Bilden einer Beschichtung, die durch Kombinieren einer Phosphorsäurebeschichtung, einer Zr-Beschichtung und einer Phenolharzbeschichtung auf der Ni-Plattierungschicht bereitgestellt wird, indem eine elektrolytische Kathodenbehandlung unter Verwendung einer sauren Lösung, hergestellt durch Lösen von Zr-Ionen, Phosphationen und eines Phenolharzes, durchgeführt wird,
wobei die durch Kombinieren der Phosphorsäurebeschichtung und der Zr-Beschichtung bereitgestellte Beschichtung 0,1 mg/m² bis 100 mg/m², ausgedrückt als P-Gehalt und 0,1 mg/m² bis 500 mg/m², ausgedrückt als Zr-Gehalt, enthält, und
die durch Kombinieren der Phosphorsäurebeschichtung, der Zr-Beschichtung und der Phenolharzbeschichtung bereitgestellte Beschichtung 0,1 mg/m² bis 100 mg/m², ausgedrückt als P-Gehalt, 0,1 mg/m² bis 500 mg/m², ausgedrückt als Zr-Gehalt und 0,1 mg/m² bis 100 mg/m², ausgedrückt als C-Gehalt, enthält; und wobei die Phosphorsäurebeschichtung ein Zr-Phosphat enthält und die Zr-Beschichtung ein oxidiertes Zr enthält.

6. Das Verfahren zur Herstellung eines Stahlblechs für Behälter nach Anspruch 5, wobei die durch Kombinieren der Phosphorsäurebeschichtung und der Zr-Beschichtung bereitgestellte Beschichtung 0,1 mg/m² bis 15 mg/m², ausgedrückt als Zr-Gehalt; und
0,1 mg/m² bis 15 mg/m², ausgedrückt als P-Gehalt, enthält, oder
die durch Kombinieren der Phosphorsäurebeschichtung, der Zr-Beschichtung und der Phenolharzbeschichtung bereitgestellte Beschichtung 0,1 mg/m² bis 15 mg/m², ausgedrückt als Zr-Gehalt;
0,1 mg/m² bis 15 mg/m², ausgedrückt als P-Gehalt; und
0,1 mg/m² bis 15 mg/m², ausgedrückt als C-Gehalt, enthält.

7. Das Verfahren zur Herstellung eines Stahlblechs für Behälter nach Anspruch 5, wobei die durch Kombinieren der Phosphorsäurebeschichtung und der Zr-Beschichtung bereitgestellte Beschichtung 0,1 mg/m² bis 9 mg/m², ausgedrückt als Zr-Gehalt; und
0,1 mg/m² bis 8 mg/m², ausgedrückt als P-Gehalt, enthält, oder
die durch Kombinieren der Phosphorsäurebeschichtung, der Zr-Beschichtung und der Phenolharzbeschichtung bereitgestellte Beschichtung 0,1 mg/m² bis 9 mg/m², ausgedrückt als Zr-Gehalt;
0,1 mg/m² bis 8 mg/m², ausgedrückt als P-Gehalt; und
0,1 mg/m² bis 8 mg/m², ausgedrückt als C-Gehalt, enthält.

8. Das Verfahren zur Herstellung eines Stahlblechs für Behälter nach Anspruch 5, wobei die elektrolytische Kathodenbehandlung in der Gerbsäure enthaltenden sauren Lösung durchgeführt wird.

## Revendications

1. Tôle d'acier pour récipient comprenant :
un substrat en acier ;
une couche de placage de Ni qui contient de 150 mg/m² à 1 000 mg/m² de Ni et est formée sur au moins une surface du substrat en acier ; et
soit un revêtement fourni par combinaison d'un revêtement d'acide phosphorique et d'un revêtement de Zr, ledit revêtement combiné étant formé sur la couche de placage de Ni en réalisant un traitement électrolytique de cathode utilisant une solution acide préparée par dissolution d'ions Zr et d'ions phosphate ; dans laquelle ledit revêtement combiné contient de 0,1 mg/m² à 100 mg/m² en termes de teneur en P et de 0,1 mg/m² à 500 mg/m² en termes de teneur en Zr,
soit un revêtement fourni par combinaison d'un revêtement d'acide phosphorique, d'un revêtement de Zr et d'un revêtement de résine de phénol, ledit revêtement combiné étant formé sur la couche de placage de Ni en réalisant un traitement électrolytique de cathode utilisant une solution acide préparée par dissolution d'ions Zr, d'ions phosphate et d'une résine de phénol ; dans laquelle ledit revêtement combiné contient de 0,1 mg/m² à 100 mg/m² en termes de teneur en P, de 0,1 mg/m² à 500 mg/m² en termes de teneur en Zr et de 0,1 mg/m² à 100 mg/m² en termes de teneur en C ;
dans laquelle le revêtement d'acide phosphorique contient un phosphate de Zr et le revêtement de Zr contient un Zr oxydé.

2. Tôle d'acier pour récipient selon la revendication 1, dans laquelle
le revêtement fourni par combinaison du revêtement d'acide phosphorique et du revêtement de Zr contient de 0,1 mg/m² à 15 mg/m² en termes de teneur en Zr ; et
de 0,1 mg/m² à 15 mg/m² en termes de teneur en P, ou
le revêtement fourni par combinaison du revêtement d'acide phosphorique, du revêtement de Zr et du revêtement de résine de phénol contient de 0,1 mg/m² à 15 mg/m² en termes de teneur en Zr ;
de 0,1 mg/m² à 15 mg/m² en termes de teneur en P ; et
de 0,1 mg/m² à 15 mg/m² en termes de teneur en C.

3. Tôle d'acier pour récipient selon la revendication 1, dans laquelle
le revêtement fourni par combinaison du revêtement d'acide phosphorique et du revêtement de Zr contient de 0,1 mg/m² à 9 mg/m² en termes de teneur en Zr ; et
de 0,1 mg/m² à 8 mg/m² en termes de teneur en P, ou
le revêtement fourni par combinaison du revêtement d'acide phosphorique, du revêtement de Zr et du revêtement de résine de phénol contient de 0,1 mg/m² à 9 mg/m² en termes de teneur en Zr ;
de 0,1 mg/m² à 8 mg/m² en termes de teneur en P ; et
de 0,1 mg/m² à 8 mg/m² en termes de teneur en C.

4. Tôle d'acier pour récipient selon la revendication 1, dans laquelle
le traitement électrolytique de cathode est réalisé dans une solution acide contenant de l'acide tannique.

5. Procédé de production d'une tôle d'acier pour récipient selon l'une quelconque des revendications 1 à 4, comprenant les étapes de :
formation d'une couche de placage de Ni contenant de 150 mg/m² à 1 000 mg/m² de Ni sur au moins une surface du substrat en acier ; et
soit de formation d'un revêtement fourni par combinaison d'un revêtement d'acide phosphorique et d'un revêtement de Zr sur la couche de placage de Ni en réalisant un traitement électrolytique de cathode utilisant une solution acide préparée par dissolution d'ions Zr et d'ions phosphate, ou
soit de formation d'un revêtement fourni par combinaison d'un revêtement d'acide phosphorique, d'un revêtement de Zr et d'un revêtement de résine de phénol sur la couche de placage de Ni par réalisation d'un traitement électrolytique de cathode utilisant une solution acide préparée par dissolution d'ions Zr, d'ions phosphate et d'une résine de phénol,
dans lequel le revêtement fourni par combinaison du revêtement d'acide phosphorique et du revêtement de Zr contient de 0,1 mg/m² à 100 mg/m² en termes de teneur en P et de 0,1 mg/m² à 500 mg/m² en termes de teneur en Zr, et
le revêtement fourni par combinaison du revêtement d'acide phosphorique, du revêtement de Zr et du revêtement de résine de phénol contient de 0,1 mg/m² à 100 mg/m² en termes de teneur en P, de 0,1 mg/m² à 500 mg/m² en termes de teneur en Zr et de 0,1 mg/m² à 100 mg/m² en termes de teneur en C ; et
dans lequel le revêtement d'acide phosphorique contient un phosphate de Zr et le revêtement de Zr contient un Zr oxydé.

6. Procédé de production d'une tôle d'acier pour récipient selon la revendication 5, dans lequel
le revêtement fourni par combinaison du revêtement d'acide phosphorique et du revêtement de Zr contient de 0,1 mg/m² à 15 mg/m² en termes de teneur en Zr ; et
de 0,1 mg/m² à 15 mg/m² en termes de teneur en P, ou
le revêtement fourni par combinaison du revêtement d'acide phosphorique, du revêtement de Zr et du revêtement de résine de phénol contient de 0,1 mg/m² à 15 mg/m² en termes de teneur en Zr ;
de 0,1 mg/m² à 15 mg/m² en termes de teneur en P ; et
de 0,1 mg/m² à 15 mg/m² en termes de teneur en C.

7. Procédé de production d'une tôle d'acier pour récipient selon la revendication 5, dans lequel
le revêtement fourni par combinaison du revêtement d'acide phosphorique et du revêtement de Zr contient de 0,1 mg/m² à 9 mg/m² en termes de teneur en Zr ; et
de 0,1 mg/m² à 8 mg/m² en termes de teneur en P, ou
le revêtement fourni par combinaison du revêtement d'acide phosphorique, du revêtement de Zr et du revêtement de résine de phénol contient de 0,1 mg/m² à 9 mg/m² en termes de teneur en Zr ;
de 0,1 mg/m² à 8 mg/m² en termes de teneur en P ; et
de 0,1 mg/m² à 8 mg/m² en termes de teneur en C.

8. Procédé de production d'une tôle d'acier pour récipient selon la revendication 5, dans lequel
le traitement électrolytique de cathode est réalisé dans la solution acide contenant de l'acide tannique.
